(19) Europäisches Patentamt
European Patent Office
Office européen des brevets

(11) Publication number : 0 435 570 A1

# (12) EUROPEAN PATENT APPLICATION

(21) Application number : 90313990.5

(51) Int. Cl.[5] : G06K 9/50

(22) Date of filing : 20.12.90

(30) Priority : 20.12.89 US 453628

(43) Date of publication of application : 03.07.91 Bulletin 91/27

(84) Designated Contracting States : DE FR GB

(71) Applicant : REICHHOLD CHEMICALS, INC.
800 Capitola Drive, Research Triangle Park
Durham, North Carolina 27709 (US)

(72) Inventor : Ruan, Jianzhong J.
17, Squire Circle, Dover,
Delaware 19901 (US)

(74) Representative : Gibson, Stewart Harry et al
URQUHART-DYKES & LORD Business Technology Centre Senghennydd Road
Cardiff CF2 4AY South Wales (GB)

## (54) Measurement of particle size and distribution.

(57) A method for measuring the size and distribution of particles in a particulate composition comprises scanning an image or a thin sample of the particulate composition, obtaining chord data of the particles along a plurality of scan lines, and converting chord data to particle size.



Jouve, 18, rue Saint-Denis, 75001 PARIS

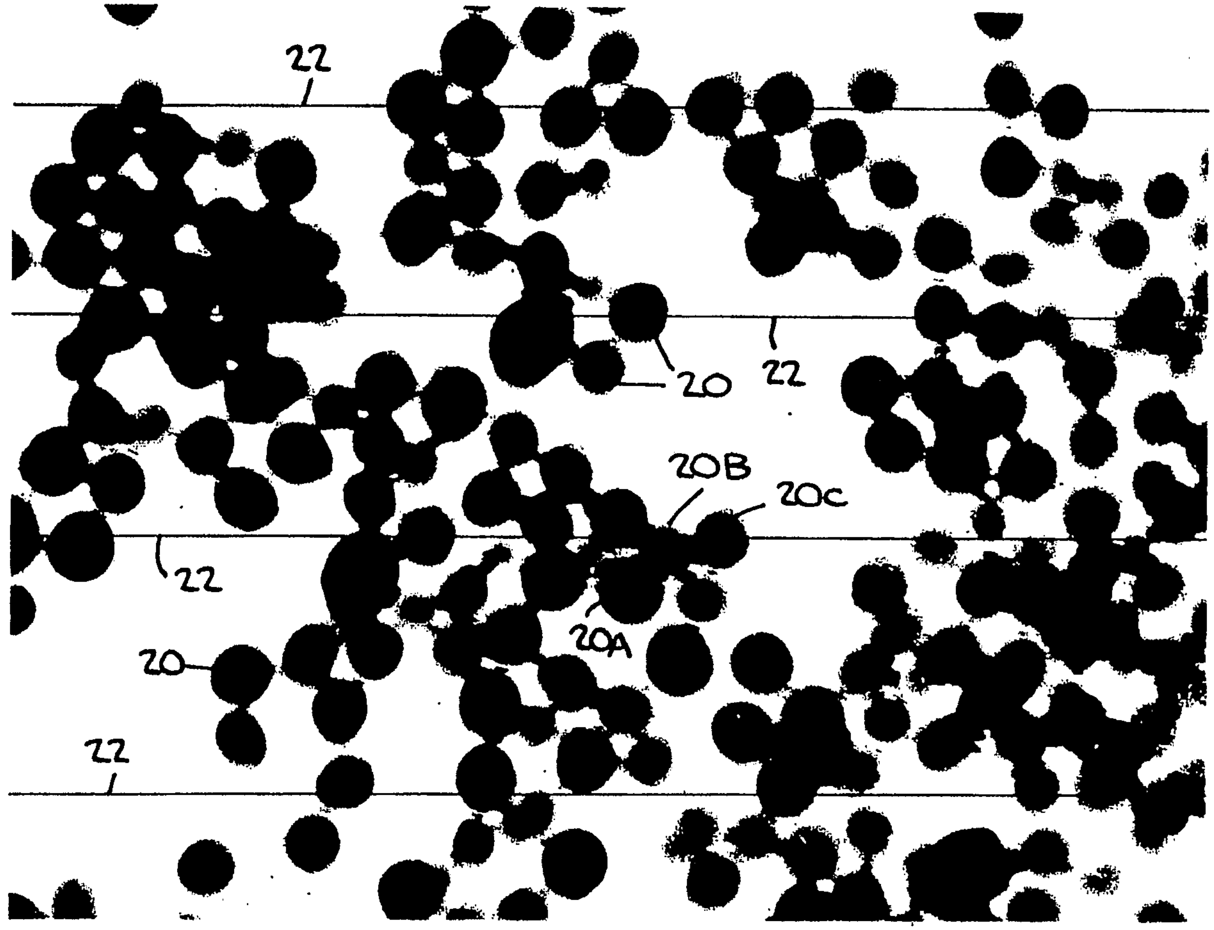


Fig.1.

# MEASUREMENT OF PARTICLE SIZE AND DISTRIBUTION

## BACKGROUND OF THE INVENTION

### 1. Field of the Invention

This invention relates to the measurement of size and distribution of particles and voids. More specifically, the invention relates to a method of measurement that includes scanning an image or a sample of particles, obtaining chord data along a scan line, and mathematically converting chord data to particle diameter.

### 2. The Prior Art

There is considerable interest in measuring particle size and size distribution in many substances. Particle size and size distribution are closely related to the performance and physical and chemical properties of latices, suspensions, and a wide variety of powdered materials. For example, such parameters as the rheology of suspensions, porosity, elasticity, solubility, viscosity, permeability and opacity, are affected by particle size and size distribution.

This is especially true with coating compositions. In such compositions, relatively small particles with a uniform size distribution are relied upon to produce high gloss coatings. Large particles lead to non-uniform coatings while small particles may cause dilatancy.

Methods for determining particle size and size distribution are disclosed by E. A. Collins et al, Journal of Paint Technology, vol. 47, page 35 (1975). More recently developed measurement techniques such as sedimentation field-flow fraction are discussed in an article by S. Lee et al, Analytical Chemistry, vol. 60, page 1129, (1988). Capillary hydrodynamic fractionation is discussed in an article by J. G. Dos Ramos et al, CHDF Application Note 501 (1989).

Microscopic techniques are probably the most reliable and widely used methods for measuring particle size. However, microscopic methods typically have been slow and tedious until the advent of the computer-image analyzer. A major drawback of this technique is that it is not capable of analyzing coagulated particles wherein there is substantial agglomeration.

U.S. Patent No. 3,832,687 to Miller et al and U.S. Patent No. 3,845,466 to Hong disclose methods of determining distribution and probability analysis to recognize and identify patterns.

U.S. Patent No. 4,249,648 to Meyer discloses a token identifying system, based on performing a series of measurements of chord lengths.

U.S. Patent No. 4,596,037 to Bouchard et al discloses measuring the location and size of a hole in a panel, by measuring the chord length of that hole. To determine the center of the hole, a plurality of linear scans are generated to sense the hole edge. Scan lines are compared with preset values to either reject or store matching data in memory.

U.S. Patent No. 4,453,226 to Hobbs et al discloses a method to determine the size distribution of particles of a particular composition in a sample of host material using x-rays propagated through the particle. The selected multi-parameter distribution function, such as joint distribution function, using both Gaussian and Poisson distributions, is fitted to the peaks of the representations forming a histogram.

U.S. Patent No. 4,641,244 to Wilson et al relates to a method and apparatus for registering the halftone color separation films used in color picture processing.

Measurement of pore size distribution in solid foamed materials is disclosed in an article entitled "Pore Size Distributions of Foams from Chord Distributions of Random Lines: Mathematical Inversion and Computer Simulation" by J.J. Ruan, M.H. Litt, and I.M. Krieger in the Journal of Colloid and Interface Science, Vol 126, No. 1, pages 93 to 100, November 1988. Therein the planar surface of a cut through bulk porous material exhibits portions of voids which are generally spherical (as in the case of formation of bubbles), and free of any substantial agglomeration. The problem of agglomeration which extends over clusters of many particles in film samples is not disclosed in this article. The substantial agglomeration of voids in the foregoing bulk is dealt with by manual measurement of the voids. The maximum apparent diameter at the surface cut in the bulk is measured. No scanning or projection of an image of the three dimensional bulk is possible as in the case of examining particles in a film sample. Thus, the study of voids in a bulk sample offers little help in the way of formulating an approach to accurately measure particles or voids in a film sample.

## SUMMARY OF THE INVENTION

The present invention provides a measurement procedure for automated analysis of particle size data obtained by scanning an image or a sample of a particulate composition to obtain chord data along a plurality of scan lines, and then converting the chord data to particle size.

The invention provides for analysis of data obtained by scanning an image of a sample of a substance to be studied. The sample can be prepared as an emulsion which can be examined on a microscope slide, or the sample holder of an electron microscope. The sample is then viewed by scanning, employing a detector which outputs an electric scanning signal in response to the presence of particles in the sample.

The scanning signal obtained from a single line scan has variations in amplitude dependent on variations in the density of agglomerated particles along the scan line. Changes in signal strength occur as the scan passes from a particle to a space between particles. The pattern of a scanning signal is related, therefore, to the physical size of a particle. Assuming that particles are approximately spherical with circular projections upon the sample holder, the duration of pulses of the scanning signal are proportional to chord length of the particles, as measured along the scan line. The chord length data is used to provide the diameter of the particles, as measured in three dimensions, in accordance with the following invention.

The invention can also be used to measure voids, as in foamed material, by preparing a thin, essentially two-dimensional slice of the foamed material in which a void appears as an aperture which can be scanned. The boundary of the aperture can be treated mathematically in the scan manner as the boundary of a particle so as to allow for calculation of the diameter of void, based on an assumption of a spherical shape, as is done in the case of particles.

## BRIEF DESCRIPTION OF THE DRAWINGS

Fig. 1 is an electron photomicrograph of a latex ;

Fig. 2 is a graph showing the variation in intensity of a scanning signal obtained by detecting a set of pixels along a scan line ;

Fig. 3 is a histogram showing computer automated chord length distribution from an electron photograph image ;

Fig. 4 is a histogram showing converted diameter-distribution of particle sizes, and shows a smoothed chord distribution and a sphere diameter distribution ;

Fig. 5 shows a particle diameter distribution, obtained from manual measurement of particle diameters ;

Fig. 6 is a schematic block diagram of the measurement method of the invention ;

Fig. 7 is a more detailed block diagram showing the sequence of steps involved in the invention ;

Fig. 8 is a simplified diagrammatic view of scanner apparatus suitable for use with an optical microscope in the measurement method of the invention ;

Fig. 9 is a flow chart explaining the operation of a computer employed in the scheme of Figs. 6 and 7 ; and

Fig. 10 is an additional flow chart showing a more detailed portion of the flow chart of Fig. 9.

## DESCRIPTION OF THE PREFERRED EMBODIMENTS

In accordance with the present invention, there is provided a method for the automated analysis of particle sizes based on a correlation between a circle diameter distribution function (CDF) and a chord length distribution function (CLF). The CLF is an integral transform of the CDF, and a mathematical procedure is derived for inverting the CLF to obtain the CDF. Computer automation of this analytical method can be performed in a two-step operation.

In the first step, chords are measured either by defining two end points of each peak of a scanning signal or by a scanning laser.

In the second step, chords are assembled into a histogram and smoothed either by use of a binomial distribution or by a nonlinear regression, and then converted to the CDF.

Since chord lengths are experimentally easy to measure, and because this data lends itself readily to computer automation, the methodology of the present invention provides an effective technique for the quick determination of particle size and size distribution.

By way of example, the particle size of an emulsion can be determined by placing a sample on a microscope slide, or a sample holder of an electron microscope. The sample is then viewed by scanning, employing a detector which outputs an electric scanning signal in response to the presence of particles in the sample.

The scanning signal obtained from a single line scan has variations in amplitude dependent on variations in the density of particles along the scan line. Some of the particles may be agglomerated. Changes in signal amplitude occur as the scanning signal passes over a particle to a space between particles. The pattern of the scanning signal, therefore, relates to the physical size of a particle.

Assuming that particles have an approximately spherical configuration, that project as circles upon the sample holder, the pulse duration of the scanning signal is proportional to the particle chords, as measured along the scan line. The chord length data is then used to provide information about the diameter of the particles, as measured in three dimensions.

In practicing the invention, a micrograph of the particles is taken directly from a microscope such as a transmission electron microscope (TEM), scanning electron microscope (SEM), or optical microscope (OM). An image is then captured from the micrograph by a camera such as a video camera. If a video camera or detector is mounted inside the microscope, the image can be directly captured from the screen or sample and sent to a computer with an image digitizing board. If a focused scanning laser is used, chord length, 1, can be directly determined from the time, t, it takes to cross a particle and its scanning velocity, v : 1 = v.t.

The image or video digitizer will convert the video analog signal into digital intensity (called grey level) at each pixel according to the brightness of the image. Once digitized, the image can be displayed, manipulated, processed using appropriate software, stored, retrieved, or printed, in the manner of a conventional computer data file.

With reference to the drawings, Fig. 1 is a photomicrograph of a latex using TEM with 20,000 magnification at 60 kev. The latex particles have a generally spherical shape, the term "generally" being understood to mean that there is frequently some departure from a true spherical shape and that certain particles may have an ellipsoidal shape or other undulation from a true spherical shape. Therefore, in the practice of the invention, the particles can be characterized as being generally spherical.

When viewed in a microscope slide or a sample holder, the three-dimensional spherical shape of the particles is projected in the form of the two-dimensional generally circular particles 20 in Fig. 1. The particles 20 may be separate from one another or, may be agglomerated as indicated by the particle groupings 20A, 20B, and 20C.

The particles in a digitized image can be viewed as a set of scan lines 22. While hundreds of parallel scan lines along parallel contiguous paths are involved in the viewing of an entire image, Fig. 1 shows only a few of the scan lines 22 by way of example. Similar scan lines are employed in viewing the latex sample with a microscope and television vidicon (not shown) wherein an electron beam scans an enlarged image of the latex sample projected by the microscope upon a photosensitive screen of the vidicon.

The scan lines 22 depict a scan path which can transect the particles 20 along a diameter or along a chord displaced from the diameter. The length of the particle chord will vary, depending upon the size of the particle and the distance of the chord from the center of the particle. In addition, the chord length can increase substantially where several particles are agglomerated along the scan line 22. Also, in the case of agglomerated particles, a scan line can contact a plurality of particles to provide a plurality of small chord lengths.

Therefore, in practicing the invention, it is necessary to establish limits on the signal range scanning the particles, and to use only chord data which truly represents individual particles and to exclude anomalous data resulting from particle agglomeration.

The irregular nature of an analog signal scanning the particles of Fig. 1 along a scan line 22 is depicted in Fig. 2 wherein the undulating trace 24 of a scan signal is shown, and which, at times, can be irregular. Small circles 26 have been appended to the trace 24 to identify locations where a scan line intersects the edge of a particle 20. The actual location of the intersection sites can vary depending on the existence and intensity of noise in the signal measurements.

Since each peak of the scan signal represents the presence of a particle on a scan line, the distance between two points of intersection of the scan line with a peak region of the signal corresponds to a chord length. Hence, measuring chord length distribution can be accomplished by obtaining the distances between the two end points of individual peaks of the signal trace 24 of Fig. 2. The chord length distribution is representative of particle size because large particles result in large chords in the distribution, and small particles result in small chords in the distribution.

Several methods can be used to obtain chord length distribution depending upon the particle morphology. The following is one of them by way of example.

The digitized input data P(I) is evaluated with constraints designed to minimize the effects of agglomeration in the particles when measuring the particle size in terms of chord length.

The constraints include setting the high threshold, PTH, fitting criterion, CTH, the area to chord ratio, ATH, the maximum chord length, WAX, and a reference value, DTH, which is to be compared with the derivative of the input signal, D(I). More specifically, the ATH value is a ratio of the area of a signal peak to the chord measured in the region of the signal peak.

In order to determine the point of intersection of a scan line with the edge of a particle, the derivative of the input signal, D(I), is obtained and compared with the reference value DTH, as will be described subsequently in further detail with reference to a computer program employed in the practice of the invention. Also, the input

signal is examined to determine two flat points obtained from values of the signal wherein the derivative is close to DTH, the distance between these two points representing the chord length.

The inventive procedure involves an integration of the area under a peak region of the input signal between the two points identified as the chord termini. The chord data is rejected in the event that the area of the peak region divided by the chord length is less than the ATH reference value, at which point the system operation reverts to an inspection of other points of the input signal.

Similarly, if a measurement of chord length exceeds the WAX reference value, the measurement is rejected or, alternatively, there may be employed a deconvolution or separation of the overlapped peak regions of the input data with a recordation of all measured values of the chords. This procedure is performed sequentially with successive portions of the input signal to obtain further chord data.The relationship between average chord moments, $< 1^n >$, and average diameter moments, $< x^n >$, is

$$<1^n> = \begin{cases} \frac{n!!}{(n+1)!!} \frac{\pi}{2} <x^{n-1}>/<x> & n=odd \\ \frac{n!!}{(n+1)!!} <x^{n+1}>/<x> & n=even \end{cases}$$

hence

$< 1 > = 0.25 \pi < x^2 >/< x >$ and $< x > = 0.5 \pi/< 1^{-1} >$ All chord data is recorded for subsequent smoothing and evaluation.

The mathematical basis for the practice of this invention begins with an analysis of the probability distribution of finding a specific chord at a specific distance from the center of a circular particle.

In electronphotomicrographs of particles, only two dimensional projections of spheres in the form of circles are shown. The probability, G(x)dx, that circles in the diameter range (x, x + dx) intersect a random line is proportional to their diameters and can be represented by the following equation :

$$G(x)dx = \frac{xF(x)dx}{\int_0^\infty x\ F(x)dx} = \frac{x}{<x>} F(x)dx \qquad (1)$$

F(x) is the normalized distribution of circle diameters, x is the diameter, and < x > is the mean diameter.

For a line which intersects a circle of diameter x, the probability that its distance from the center lies in the range (r, r + dr) is 2dr/x, giving a chord length $1 = (x^2 - 4r^2)^{\frac{1}{2}}$. Therefore, the probability that spheres in the range (x, x + dx) are intersected to produce chords of length in the range (1, 1 + d1) is :

$$G(x)dx \frac{1d1}{x\sqrt{(x^2-1^2)}} = \frac{1\ F(x)\ dxd1}{<x>\sqrt{(x^2-1^2)}} \qquad (2)$$

Thus, the chord length distribution function, CLF, g(1), in the equation that follows :

$$g(1) = \frac{1}{<x>} \int_1^\infty \frac{F(x)}{\sqrt{(x^2-1^2)}} dx \qquad (3)$$

is an integral transform of the circle diameter distribution function, CDF.

F(x) generally can be assumed as a discrete function of x, and represented as a summation of Delta functions.

$$F(x) = \sum_{k=1}^{M} y(k)\delta(x-k) \quad (4)$$

Weight factor, y(k), is a number percentage of particles with diameter x = k, and M is the maximum diameter.

Substituting Equation (4) into Equation (3), gives

$$g(l) = \frac{1}{\langle x\rangle}\sum_{k=1}^{M} y(k)\int_{l}^{\infty}\frac{\delta(x-k)}{\sqrt{x^2-l^2}}dx = \frac{1}{\langle x\rangle}\sum_{k=1}^{M} y(k)\frac{\theta(k-l)}{\sqrt{k^2-l^2}}$$

$$= \sum_{k=1}^{M} y(k)a(k,l) \equiv y(k)\cdot A \quad (5)$$

or

$$y(k)=g(l)\,A^{-1} = \frac{1}{a(k,k)}\left[g(k)-\sum_{i=k+1}^{M} g(i)a(k,i)\right] \quad (6)$$

where A is an MxM matrix with coefficient

$$a(k,l)=\frac{1}{\langle x\rangle}\frac{\theta(k-l)}{\sqrt{k^2-l^2}}$$

$$\theta(k-l)=\begin{cases}1 & k>l\\ 0 & k<l\end{cases},$$

and $A^{-1}$ is an inverse matrix of A.

Alternatively, the inverse traverse transform to obtain CDF from CLF can be derived in the following manner :

Integrating Equation (3) by parts

$$\frac{g(l)}{l} = -\frac{1}{\langle x\rangle}\int_{l}^{\infty}\sqrt{(x^2-l^2)}\left(\frac{F(x)}{x}\right)' dx \quad (7)$$

or

$$\left(\frac{g(l)}{l}\right) = \frac{1}{\langle x \rangle}\int_{l}^{\infty} \frac{1}{\sqrt{(x^2 - l^2)}}\left(\frac{F(x)}{x}\right)' dx \qquad (8)$$

$$I = \int_{r}^{\infty}\left(\frac{g(l)}{l}\right)' \frac{dl}{\sqrt{(l^2 - r^2)}} = \frac{1}{\langle x \rangle}\int_{r}^{\infty}\int_{l}^{\infty}\frac{1}{\sqrt{x^2 - l^2}}\left(\frac{F(x)}{x}\right)' \frac{dx\,dl}{\sqrt{l^2 - r^2}} \qquad (9)$$

since

$$\int_{r}^{\infty}\int_{l}^{\infty} G(x,l)\,dx\,dl = \int_{r}^{\infty}\int_{r}^{x} G(x,l)\,dl\,dx \qquad (10)$$

$$I = \frac{1}{\langle x \rangle}\int_{r}^{\infty}\left(\frac{F(x)}{x}\right)\int_{r}^{x}\frac{l\,dl\,dx}{\sqrt{(l^2 - r^2)}\sqrt{(x^2 - l^2)}} \qquad (11)$$

$$\text{let } l^2 - r^2 = u + \frac{x^2 + r^2}{2} \equiv u + \alpha$$

$$I = \frac{1}{\langle x \rangle}\int_{r}^{\infty}\left(\frac{F(x)}{x}\right)\int_{\alpha}^{-\alpha}\frac{du}{\sqrt{(a^2 - u^2)}}\,dx = -\frac{\pi}{2\langle x \rangle}\,\frac{F(r)}{r} \qquad (12)$$

Therefore,

$$F(x) = -\frac{2\langle x \rangle x}{\pi}\int_{x}^{\infty}\frac{1}{\sqrt{(l^2 - x^2)}}\left(\frac{g(l)}{l}\right)' dl \qquad (13)$$

This information is then adapted for use in a computer program. Since the denominator or the integral function in Equation (13) becomes zero as 1 approaches x, a computer program cannot be directly applied. Hence, Equation (13) is integrated by parts to remove this singularity as follows :

$$F(x) = \frac{2\langle x \rangle}{\pi} \times \int_{x}^{\infty}\frac{\sqrt{(l^2 - x^2)}}{l}\left[\left(\frac{g(l)}{l}\right)'' - \left(\frac{g(l)}{l}\right)'\frac{1}{l}\right] dl \qquad (14)$$

which can be approximated as the summation :

$$F(x)=\frac{2\le x\ge x}{\pi}\sum_{1=x}^{N}\frac{\sqrt{(1^2-x^2)}}{1}\left[f(1+1)-2f(1)+f(1-1)-\frac{f(1+1)-f(1-1)}{21}\right] \quad (15)$$

provided that f(1) is a smooth function of 1, where f(1) = g(1)/1, x and 1 assume the discrete values 1, 2,-----, N, and N is the maximum chord length.

Because the CLF a discrete function, the inverse transform, Equation (14), is approximated as Equation (15), but since it is based on the smoothness of CLF, smoothing is usually required unless a large number of chords are measured. An alternative method is smoothing by using non-linear regression analysis, and to obtain the CDF directly from the inverse transform of the fitted continuous function. The CDF, in general, can be represented as the weighted sum of N normalized modified Gaussian functions, $F_n(x)$, as shown in Equation (16):

$$F(x)=\sum_{n=o}^{N} a_n F_n(x/x_n) \quad (16)$$

with

$$F_n\left(\frac{x}{x_n}\right)=\frac{2(n+1/2)^{n-1}}{(n)\ !\ x_n}\left(\frac{x}{x_n}\right)^{2n-1}\exp\left(-(n+1/2)\frac{x^2}{x_n^2}\right) \quad (17)$$

maximizing at $x = x_n$.

The peak half with and the relative standard deviation decreases with n as $c/(2n + 1)^{\frac{1}{2}}$ so that $F_n(x/x_n)$ becomes the Dirac delta function $(x - x_n)$ as n approaches infinity. See J. J. Ruan et al, J. Colloid and Interface Science, vol 126, page 93 (1988), the disclosure of which is incorporated by reference herein.

The following shows that the peak half width decreases as $c/\sqrt{(2n + 1)}$. Referring to Equation (17), From $F_n' = 0$, we have $x = x_n$. At half maximum,

$$\frac{F_n(x)}{F_n(x_n)}=\left[\frac{x}{x_n}\right]^{2n-1}\exp\left[-(n+1/2)\frac{x^2-x_n^2}{x_n^2}\right]=1/2 \quad (18)$$

At large values of n, we can approximate $x = x_n \pm \alpha$ with $\alpha << x_n$

$$(2n+1)\log(1\pm\alpha/x_n)-(n+1/2)(\pm2\alpha/x_n+\alpha^2/x_n^2)=-\log(2) \quad (19)$$

or

$$\pm\alpha/x_n\mp2\alpha^2/x_n^2\mp\alpha/x_n\pm\alpha^2/2x_n^2=-(1/(2n+1))\log(2) \quad (20)$$

$$\alpha=\pm\sqrt{((2\log(2)/3)/(2n+1))} \qquad (21)$$

Thus, the peak half width is

$$\Delta x= 2|\alpha| = 2(\sqrt{2\log(2)/3})/\sqrt{(2n+1)} \qquad (22)$$

Letting $\lambda = 1/x_n$, the CLF $g_n(\lambda)$ corresponding to the CDF $f_n(y)$, is derived from the modified Gaussian circle distribution as follows :

$$g_n(l)= \frac{1}{\langle x\rangle}\int_{l}^{\infty} \frac{F_n(x,x_n)}{\sqrt{(x^2 - l^2)}}\,dx \qquad (23)$$

$$= \frac{1}{\langle x\rangle}\int_{l}^{\infty} \frac{1}{n!}\left[(n+1/2)\frac{x^2}{x_n^2}\right]^n \exp\left[-(n+1/2)\frac{x^2}{x_n^2}\right](n+1/2)\frac{2x}{x_n^2}\,dx \qquad (24)$$

Let

$$u=(n+1/2)\frac{x^2 - l^2}{x_n^2}$$

and

$$(n+1/2)\frac{l^2}{x_n^2} = \alpha$$

$$g_n(l)= \frac{2l}{\langle x^2\rangle}\int_{0}^{\infty} \frac{1}{n!}(u+\alpha)^n \exp(-\alpha)\exp(-u)\,du \qquad (25)$$

$$=\frac{2l}{\langle x^2\rangle}\exp\left[-(n+1/2)\frac{l^2}{x_n^2}\right]\sum_{k=0}^{n}\frac{1}{k!}\left[(n+1/2)\frac{l^2}{\langle x_n^2\rangle}\right]^k \qquad (26)$$

$$g_n(\lambda) = \frac{\lambda\sqrt{\pi}}{\langle x\rangle}\exp[-(n+1/2)\lambda^2]\sum_{k=0}^{n}\frac{(2n-2k-1)!!}{k!(2n-2k)!!}\left[\frac{2n+1}{2}\lambda^2\right]^k \qquad (27)$$

and the CLF is

$$g(l)=\sum_{n=o}^{N} a_n g_n(l,x_n) \quad (28)$$

where double factorial (2n - 2k - 1) ! ! = (2n - 2k - 1)(2n - 2k - 3)......1, (2n - 2k) ! ! = (2n - 2k)(2n - 2k - 2).....2, and 0 ! ! = (-1) ! ! = 1.

By adjusting the center positions, $x_n$, and weighting factors, $a_n$, the chord data can be fitted to Equation (28), and the parameters can be used according to Equation (16) to obtain the experimental CDF.

The nonlinear regression method is especially useful where a Gaussian or Lorentzian distribution is expected. Similarly, CDF can be denoted as the sum of N Lorentzian functions

$$F(x)=\sum_{n=o}^{N} a_n L_n(x,x_n,w_n) \quad (29)$$

where

$$L_n(x,x_n,w_n) = \frac{1}{\pi} \frac{w_n}{(x-x_n)^2 + w_n^2} \quad (30)$$

is again centered at $x_n$ with the peak half width $2w_n$. The corresponding CLF is

$$g(l) = \sum_{n=1}^{N} a_n\, g_n\, (l,x_n,w_n) \quad (31)$$

with

$$g_n(l,x_n,w_n)=\frac{1}{\pi<x>} \frac{1}{abc}\left\{\frac{a+c}{4}\log\frac{a+b+c}{a-b+c} + \frac{b(a-c)}{\sqrt{(4ac-b^2)}}\arctan\frac{\sqrt{(4ac-b^2)}}{c-a}\right\} \quad (32)$$

$a=\sqrt{[(l+x_n)^2+w_n^2]}$, $c=\sqrt{[(l^2-x_n^2)^2+w_n^2]}$, and

$b=\sqrt{[2(ac+x_n^2-l^2+w_n^2)]}$

The following is the derivation of the chord distribution from the Lorentzian circle diameter distribution (Equation 29).

$$g(1,x_n,w_n) = \frac{1}{\pi\langle x\rangle}\int_1^{\infty}\frac{dx}{[(x-x_n)^2+w_n^2]\sqrt{(x^2-1^2)}} \equiv \frac{1}{\pi\langle x\rangle} I \quad (33)$$

Let $t^2 = (x - 1)/(x + 1)$ and with a little manipulation, we have

$$I = 2\int_0^1 \frac{(1-t^2)\ dt}{(at^2+bt+c)\ (at^2-\ bt+c)} \quad (34)$$

where $a = \sqrt{[(1 + x_n)^2 + w_n^2]}$, $c = \sqrt{[(1 - x_n)^2 + w_n^2]}$,
and $b = \sqrt{[2(ac + x_n^2 - 1^2 + w_n^2)]}$
Thus

$$g_n(1,x_n,w_n) = \frac{1}{\pi\langle x\rangle}\ \frac{1}{abc}\left[\frac{a+c}{4}\log\frac{a+b+c}{a-b+c} + \frac{b(a-c)}{\sqrt{(4ac-b^2)}}\arctan\frac{\sqrt{(4ac-b^2)}}{c-a}\right] \quad (35)$$

Once the chord data is fitted by non-linear regression ananlysis with Equation (31), the CDF can be determined by Equation (29).

This invention has been tested by many different latex particles, including narrow particle size distribution of polystyrene standards, multimodal and broad distribution of polybutadienes. The results are all within experimental error. The result from a pattern of heavily overapped particles created using computer simulation shows that the deviation of number average or weight average is less than 2% from the expected value. The following example shows the result of one of the latex particles with significant overlapping, or agglomeration.

The image of the latex particles (Fig. 1) is captured by a video camera and transferred to a computer. Though as many scan lines as a camera's resolution allowed can be used to collect all available chords, in this example, approximately 100 scan lines either horizontally or vertically across the image are used to provide a total of approximately 40,000 pixel points.

Fig. 2 shows the intensity variance of the pixels along one of the scan lines. The peak positions and end points, which are indicated by the circles 26, are chosen in Fig. 2 to be close to rather than apart from each peak center to minimize the influence of noise by setting a higher noise threshold. The resulting set of chord data is assembled into the histogram of Fig. 3.

In generating the histogram of Fig. 3, only 619 chords were utilized, and the histogram has a ragged appearance. The data can be smoothed by using Fourier analysis. See G. Goertzel, "Mathematical Methods for Digital Computers", Wiley, New York (1965), the disclosure of which is incorporated by reference herein. The data was then smoothed three times over five adjacent channels by using a binomial distribution. See P.R. Bevington, "Data Reduction and Error Analysis for the Physical Sciences", McGraw-Hill Book Company, New York (1969), the disclosure of which is incorporated by reference herein.

Fig. 4 shows the converted diameter distribution, which is in substantial agreement with the results obtained by manual measurement of 588 particle diameters as shown in Fig. 5. Their standard deviations, or the peak broadness, are within experimental error. However, the measurement time for the automation chord method of the present invention took less than three minutes while the manual diameter method took over four hours.

The particle size of various particulate materials, which can be in the form of a latex, a dry powder, a suspension, a solid bulk in which particles are embedded, or a solid foam, can be measured by the present invention. Meaningful information can be obtained from a sample that weighs no more than one milligram. Large sample size up to a kilogram can, also be used for the representative sampling. Particle sizes in the range of about 1 nanometer to 50 millimeters in diameter can be measured. The samples can be suitably mounted upon an aluminum stud, a carbon-coated copper grid, a microslide, or a transparent flow cell depending upon the specific instrument to be used in the imaging and scanning.

The samples are either illuminated by an electron beam and focused on a screen when using a transmission

electron microscope (TEM) or scanning electron microscope (SEM), or illuminated by light and focused on particles with an optical microscope (OM) or suitable camera, such as a video camera, or scanned by a focused laser beam.

The micrographs can be obtained in a conventional manner when using a transmission electron microscope, scanning electron microscope or an optical microscope. An image is then captured from the micrograph using a video camera. If a TV camera or a detector is mounted inside a microscope, the image can be captured directly from the screen or sample and transmitted to a computer.

Fig. 6 is a schematic block diagram of the operational equipment necessary to practice the invention, and includes a signal processing system 28 comprising a computer 30 to process the necessary mathematical steps by means of a suitable computer program.

An input signal can be accessed by a video camera 32, or an electron microscope 34 or an optical microscope 36, or a microscope equipped with a camera (not shown) or other video signals 38 such as scanning laser. The pixel data describing the particles in a sample of material, such as a latex, and provided by the camera 32 or microscope 34 and 36 or other source of pixel data 38, is in the form of analog signals which are converted to digital signals by the video digitizing board (not shown), which is part of the computer 30, employing well-known digital/analog conversion circuitry.

Output data provided by the computer 30 can be shown on the monitor 40 or the plotter/printer unit 42. Smoothing of the data and other analysis may be accomplished in the computer 30 or with the computer 30 in combination with a coprocessor 44.

Fig. 7 provides further information for utilizing the signal processing system 28 of Fig. 6, and schematically shows the various forms in which samples of the particulate material under analysis can exist. For example, the particulate material may exist in the form of a solid foam 46, a powder 48, a suspension 50, as bulk material 52, or aerosol 53. However, before analysis, the subject matter must be provided in essentially two-dimensional form, such as a thin film-like sample, suitable for scanning.

In the case of the foam 46, the fracture surface 54 of the foam material 46 is mounted on a stud 56, or on a slide 58, such as a microscope slide. A powder sample 48 can be supported upon the stud 56 or the slide 58.

The suspension 50 can be supported on the slide 58, or the grid 60 or within the cell 62 constructed of transparent material through which light can be passed to illuminate the suspension.

In the case of the bulk material 52, a thin section 64 is supported on the grid 60. Samples supported on the stud 56 may be viewed by a scanning electron microscope (SEM) 34A, which outputs image data of the sample in a micrograph 66.

Samples supported upon the slide 58 can be viewed by the optical microscope (OM) 36, with image data from the microscope 36 provided in a micrograph 68. Samples supported by the grid 60 may be viewed with a transmission electron microscope (TEM) 34B, with imaging data of the sample outputted as micrograph 70.

The video camera 32 can be used to view a sample contained in the cell 62, and can also be used to view imaging data from any of the micrographs 66, 68, and 70. Since the video camera 32 operates by scanning lines of pixels, it can provide scanned data for the sample in the cell 62 as well as scanned data from any of the micrographs 66, 68, and 70.

The scanning laser 63 can be used to analyze a sample of aerosol 53 or a sample in a transparency cell 62. The laser beam, which rotates at a fixed velocity, v, passes through the sample cell and falls on a detector that measures the beam's intensity. The duration time, t, for the beam to cross any particle time velocity is directly equal to chord length.

Output imaging data of the electron microscopes 34A and 34B can also be directly coupled as an input to the computer 30. Similarly, imaging data of the microscope 36 can also be directly coupled, as an input to the computer 30.

Scanned data from the camera 32 can be directly inputted to the computer 30. Data from the electron microscopes 34A and 34B and from the optical microscope 36 directly coupled to the computer 30 can be processed by the video digitizer to convert the analog data to digital data suitable for use by the computer 30.

Scanned data from the camera 32 to the computer 30 is initially processed by the video digitizer to convert the analog signals from the camera 32 to digitally formatted signals suitable for operation in the computer 30. The video digitizer converts the video analog signal to digital intensity called a "grey level", at each pixel according to the brightness of the image.

Fig. 8 depicts a typical operating sequence for scanning a sample of the particulate material. Therein, a vidicon 72, which may be used in the video camera 32, views a particulate sample 74 with a lens assembly 76. The sample 74 is supported upon the slide 58 and illuminated with the lamp 78 whose rays of light are indicated by dashed lines 80.

The lamp 78 illuminates the sample 74 from above to provide reflected light to the lens assembly 76.

Alternatively, if desired, the lamp 78 can be positioned below (not shown) the sample 74, thereby transmitting light through the slide 58.

The lens assembly 76 functions as a microscope to enlarge the image of the sample 74, which is directed to a photosensitive screen 82 on the front of the vidicon 72. An electron gun 84 within the vidicon 72 generates an electron beam 86 which is swept back and forth, as indicated by arrow 88, across the photosensitive screen 82. The sweeping of the beam 86 is accomplished by the electron gun 84 under control of beam deflection signals provided by a scan control unit 90 in a manner well known in the art of video camera construction.

The scan data in analog format outputted by the vidicon 72 passes through an amplifier 92 to an analog-to-digital converter 94. The amplifier 92 amplifies the vidicon signal to a suitable level for operation of the converter 94, which converts the analog formatted data to digitally formatted data which is outputted to a memory 96.

The memory 96 may be external to the computer 30, or may be included within it, and stores the digitized imaging data in the form of a digital word for each pixel of imaging data, and makes this data available to the computer 30 upon request.

A read-out control line 98 couples read-out control signals from the computer 30 to the memory 96 for reading out pixel data from the memory 96 to the computer 30 for processing.

Inputting the scanned data from the vidicon 72 to the converter 94 to the memory 96 is accomplished with the aid of an address counter 100 which addresses specific storage locations within the memory 96 corresponding to pixel locations along a succession of scan lines provided by the vidicon 72.

Both the scan control unit 90 and the address counter 100 are operated by clock signals from a common clock 102 to synchronize operations of the counter 100 with the scanning in the vidicon 72. In this manner, a set of pixels describing an image of the sample 74 is stored in digital format in the memory 96 to await processing by the computer 30.

Figs. 9 and 10 are each flow charts describing the operation of the computer 30 in processing the image data for the sample 74. In Fig. 9, the procedure begins with the inputting of data and various limit values at block 104 to the computer (not shown). The computer reads specific pixel values at block 106, and at block 108 takes the difference between successive pixel values to obtain a derivative.

The various derivatives are examined at block 110 to compare the derivative values to the DTH reference value. If the derivative is less than the reference value, then the derivatives at further points along the scan line are evaluated to find a derivative having a value greater than the DTH reference value.

A check is made also at block 112 to determine if the waveform of the image signal is flat. The locations of the pixels or points along the scan line, wherein two of the derivatives have the requisite values, determine the chord length of a particle of the sample material as measured along the scan line.

Upon determining the end points of possibly valid chords, the procedure continues with the determination of the ratio of area under the scanned image waveform to the length of the chord being evaluated. This is accomplished at blocks 114 and 116 wherein the area of the scanned image waveform for various chord values is calculated by integrating the scanned image waveform along the length of the chord. Then, at block 118, the ratio of the area to the corresponding chord is compared to the ATH reference value. If the ratio test fails, then the operation proceeds via line 120 to examine further possibly valid chords and their corresponding areas.

If the ratio test is good, then the procedure continues at block 122 to determine whether the apparently valid chord values are also within the acceptable maximum chord length, WAX. If the chord under examination falls within the limitation of the maximum chord length, WAX, then the operation reverts to block 124 and line 120 to block 110 to examine further chords.

In the event that a chord under examination exceeds the allowable length at block 122, then the operation proceeds to block 126 to deconvolute overlapped peaks in the scanned image waveform. Thereafter, at blocks 128 and 130 chi-square, goodness-of-fit criterion, is compared with the threshold, CTH, and the resulting chords are accepted or rejected depending upon whether the chi-square is less or greater than CTH. For heavily overlapped particles, this can be done by fitting the non-overlapped portion of particles to a circle with the least square refinement, and chords will be extracted according to the outer edges of the particles if chi-square is less than CTH.

Thereafter, at blocks 132 and 134, the acceptable chord lengths are saved and the operation reverts via line 120 to obtain further chord data at block 110. When all data points have been examined, as determined by block 136, the operation proceeds via blocks 106 and 108 to generate an end-of-file flag at block 138. This initiates processing of the chord data into a suitable output form as shown in Fig. 10.

With reference to Fig. 10, the valid chord data is extracted from memory and applied via block 140 for smoothing by either a Lorentzian fitting at block 142 or by a Gaussian fitting at block 144, or by smoothing at block 146 by Fourier analysis (F) of the set of chord lengths followed by binomial distribution (B) smoothing.

Thereafter, computation of the diameter from the chord data is accomplished by the blocks 148, 150 or

152 from the smoothed data for printing out the particle diameter at block 154. The computation takes place in accordance with the foregoing mathematical description. The outputted data appears on the monitor 40 or the printer 42 of Fig. 7.

In view of the foregoing description, it is apparent that the system 28 of Figs. 6 and 7 is able to extract chord data from a series of light intensity measurements illuminating a sample of material comprising particles which may be partially overlapping or agglomerated. The chord data is used to compute the diameter of two-dimensional circular projections of the particles, wherein the diameter is equal to that of the three-dimensional spherical representation of the particles.

Though the mathematical analysis and the examples given in this application is based on spherical or sphere-like particles, the method can also be applied to voids in thin, essentially two-dimensional, slices of solid foam, and the like.

In the case of voids or pores in the thin sections, a double transform from chord length distribution to circle diameter distribution and then from circle diameter distribution to sphere diameter distribution is required, since the fracture surface does not generally pass through the centers of the spheres.

In contrast, in the measurement of particles in film sample, entire particles are present. Therefore, the diameter distribution applies directly to the true size of the particles.

It will be appreciated that in the embodiment which has been described, the normalised distribution of circle diameters F(x) is given by either equation 15 or 16, and has a peak half width given by equation 22.

## Claims

1. A method for measuring the individual particle size and size distribution of agglomerated as well as dispersed particles in a particulate composition, comprising :
   (a) scanning an image or a thin section of a sample of the particulate composition ;
   (b) obtaining chord data of the particles along a plurality of scan lines ;
   (c) converting chord data to particle size, in accordance with the equation :

$$g(1) = \frac{1}{\langle x \rangle} \int_{1}^{\infty} \frac{F(x)}{\sqrt{(x^2-1^2)}} dx$$

   wherein 1 is the chord length of a particle,
   g(1) is the chord length distribution function,
   x is the circle diameter of a particle,
   < x > is the mean diameter, and
   F(x) is the normalized distribution of circle diameters.

2. The method of claim 1, wherein the scanning is accomplished with a scanning detector which outputs an electric scanning signal designating the presence of particles in the sample, and wherein the chord data is obtained from the scanning signal of said detector.

3. The method of claim 1, comprising comparing the chord length to a reference value of maximum chord length, and discarding chord values whose length exceeds the maximum length.

4. The method of claim 1, wherein the chord data for the individual particles is obtained by setting constraints on a peak height threshold, and maximum chord length.

5. The method of claim 1, wherein a chord length distribution is obtained and then smoothed by means selected from the group consisting of a binomial distribution or a non linear regression and then converted to a circle diameter distribution.

6. The method of claim 1, wherein smoothing of the particle size distribution is accomplished by means of at least one distribution selected from the group consisting of binomial distribution, Lorentzian distribution, and Gaussian distribution.

7. The method of claim 1, wherein said particulate composition is selected from the group consisting of finely

divided particles, suspension, solid bulk, foam, or aerosol.

8. A method for measuring the size of particles from a sample of a particulate substance wherein, in an image of the sample, the particles can appear separate and agglomerated, comprising :
   (a) scanning the sample to provide a set of pixels forming an image of the sample, each pixel having data describing the intensity of the image at the site of the pixel ;
   (b) evaluating the pixel data in successive locations along a scan line in said image to determine the presence of intersections of the scan line with edges of a set of the particles in the sample, the particle set consisting of a single particle or a mass of agglomerated particles ;
   (c) describing the data of said successive pixels in a graph of image intensity of a portion of said particle set ;
   (d) differentiating said graph to produce derivatives of said graph at the locations of said successive pixels ;
   (e) comparing derivatives of said successive pixel values with a reference signal to determine locations of said intersections, the distance between two intersections defining a chord length of the particle set; and
   (f) converting the chord length to particle size distribution based on statistical correlation between the chord length and the particle size.

9. The method of claim 8 (f) wherein the chord length is converted to particle size in accordance with the equation :

$$g(1) = \frac{1}{<x>} \int_{1}^{\infty} \frac{F(x)}{\sqrt{(x^2-1^2)}} dx$$

wherein 1 is the chord length of a particle,
   g(1) is the chord length distribution function,
   x is the circle diameter of a particle,
   < x > is the mean diameter, and
   F(x) is the normalized distribution of circle diameters.

10. The method of claim 8, wherein the image intensity data of each pixel is plotted on a graph.

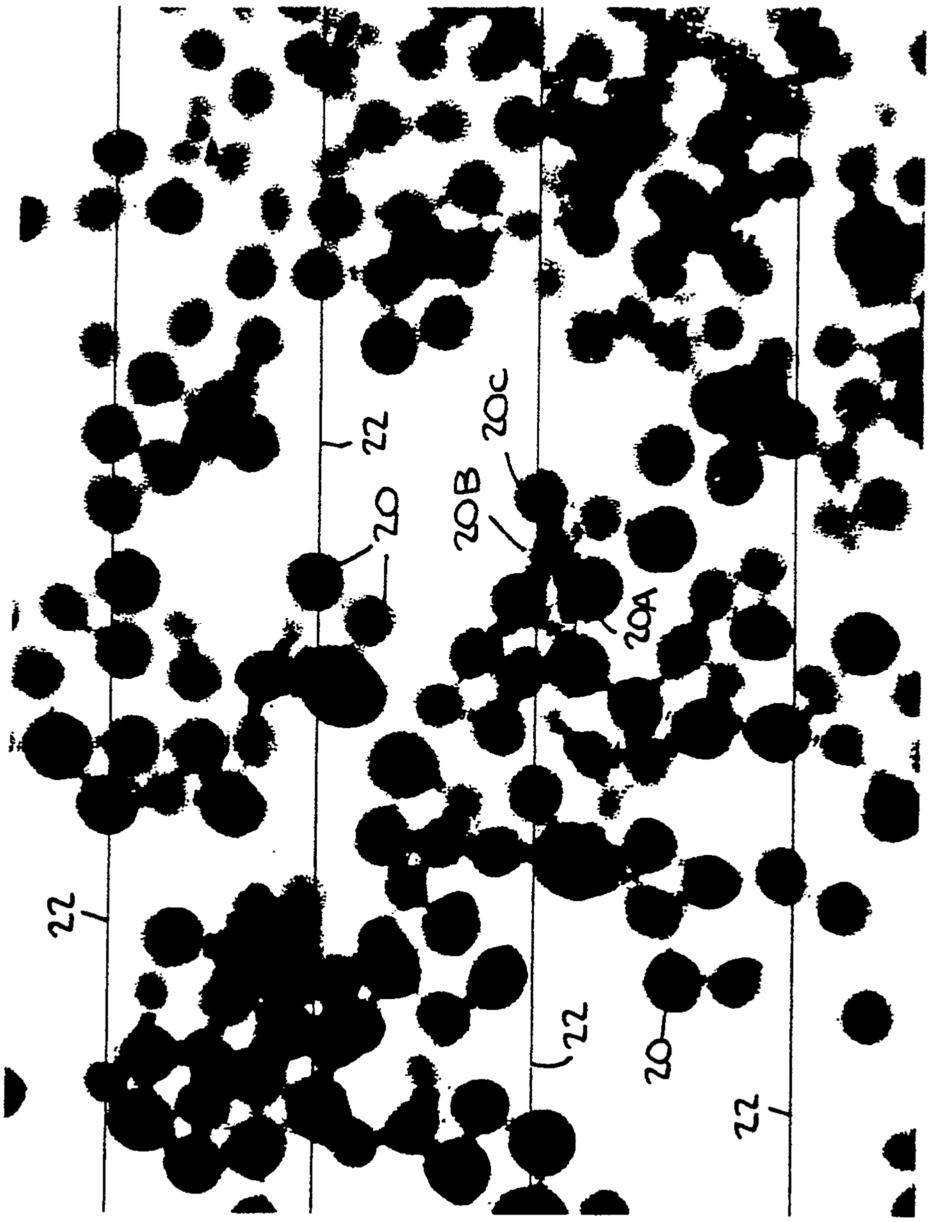


Fig. 1.

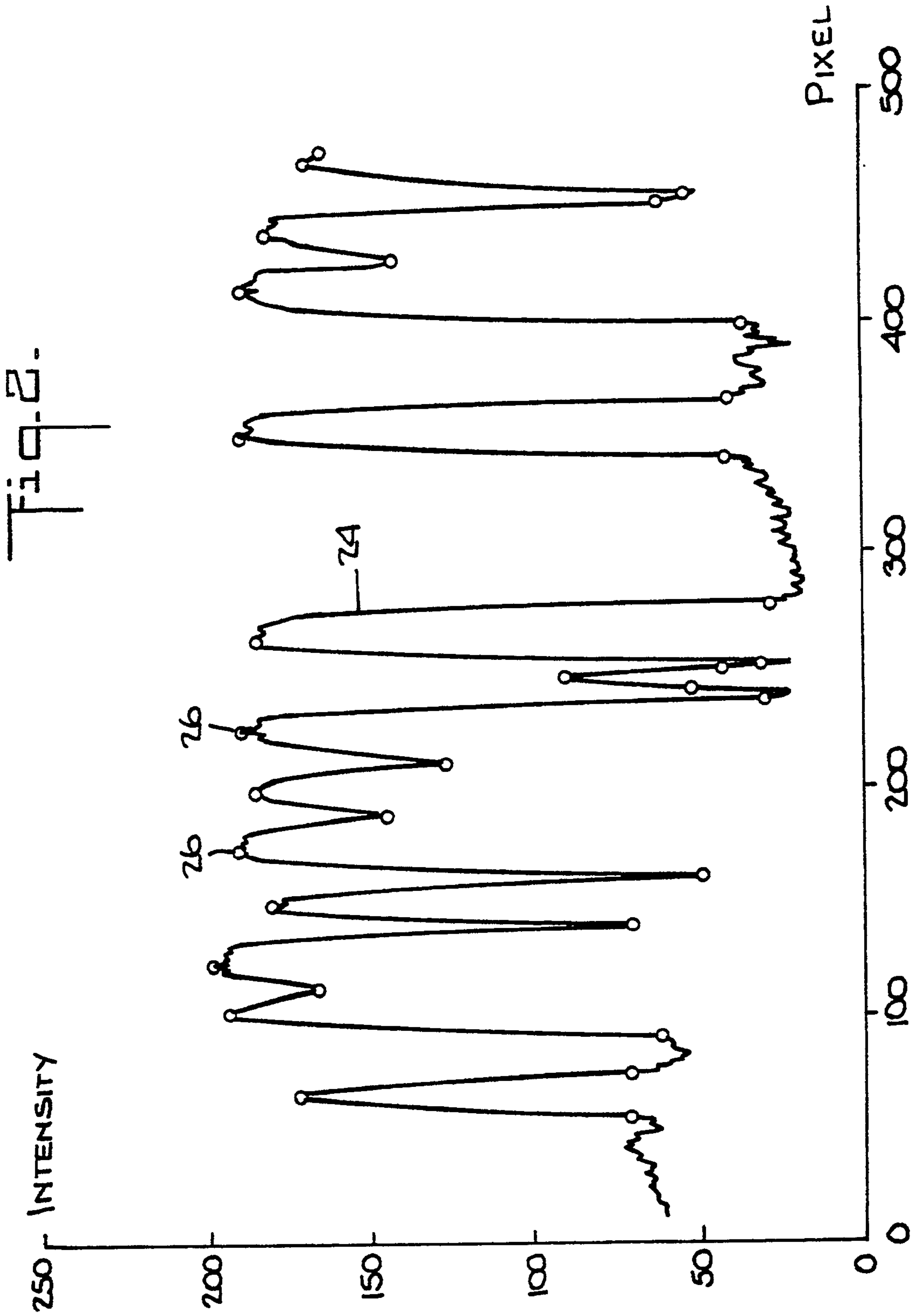
INTENSITY
PIXEL
250
200
150
100
50
0
0
100
200
300
400
500
24
26
26

Fig. 2

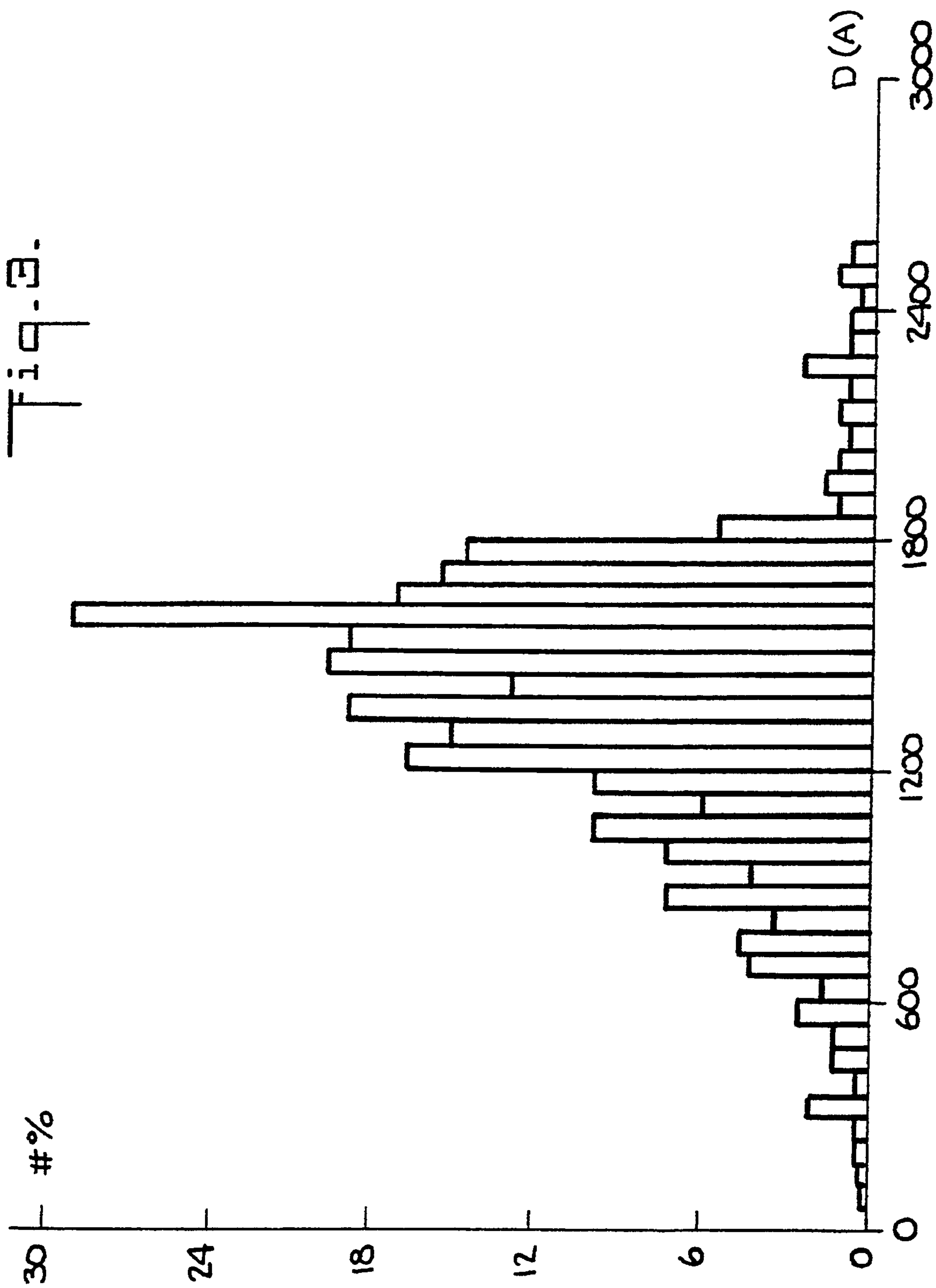


Fig. 3.

Fig. 4.

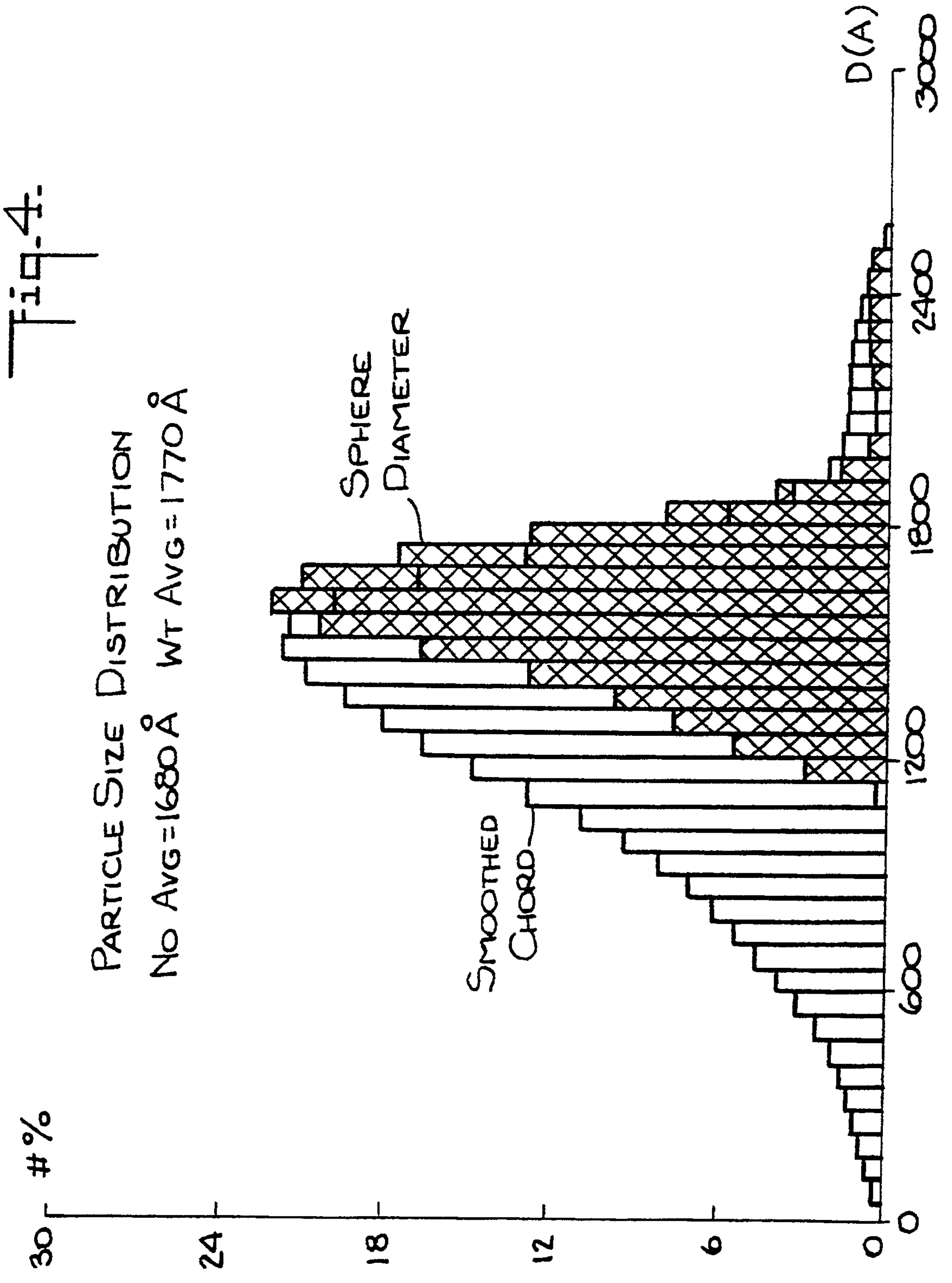
PARTICLE SIZE DISTRIBUTION
NO AVG = 1680 Å
WT AVG = 1770 Å
SPHERE DIAMETER
SMOOTHED CHORD
#%
30
24
18
12
6
0
0
600
1200
1800
2400
3000
D(A)

Fig. 5.

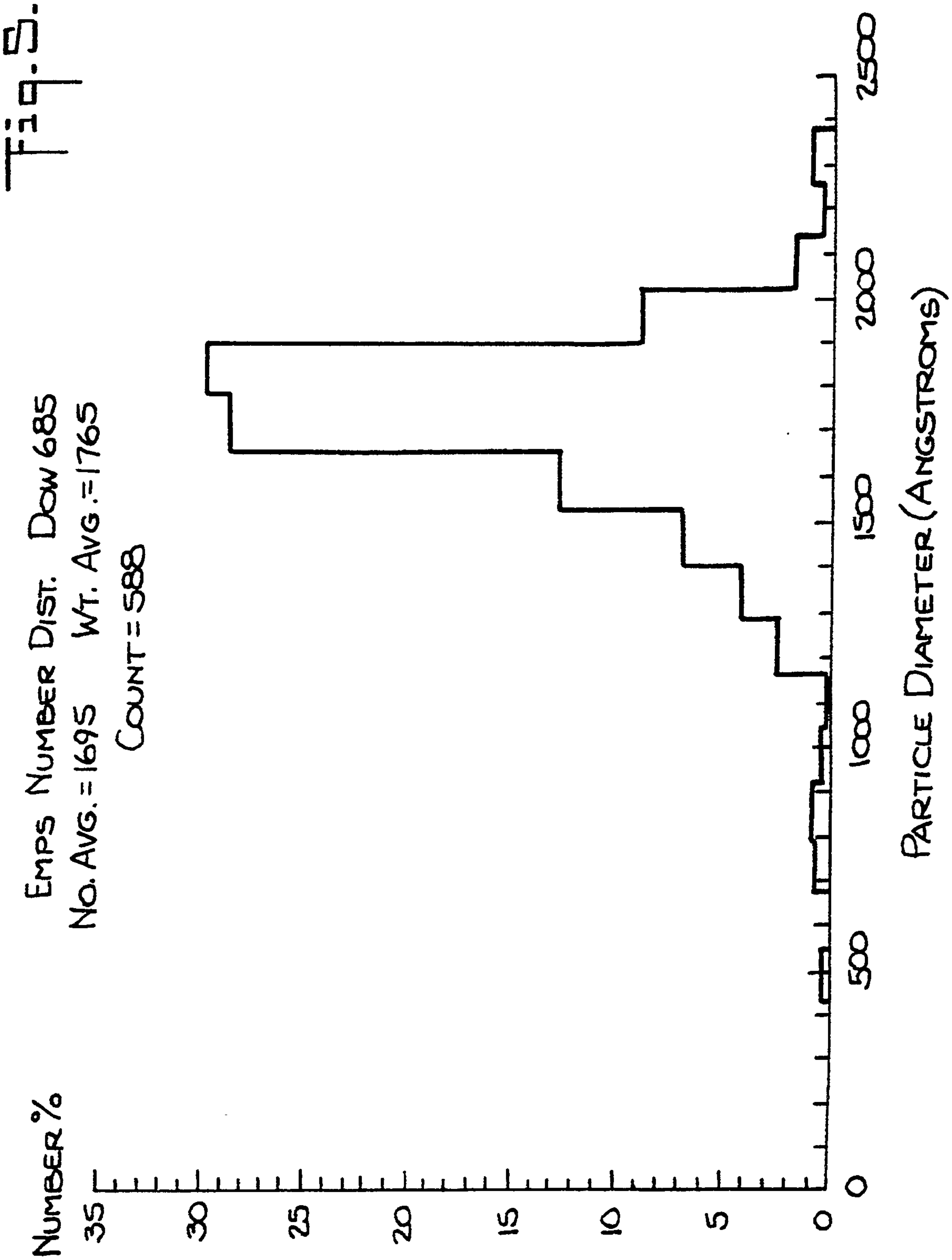
EMPS Number Dist. Dow 685
No. Avg. = 1695 Wt. Avg. = 1765
Count = 588
Number %
35
30
25
20
15
10
5
0
0
500
1000
1500
2000
2500
Particle Diameter (Angstroms)

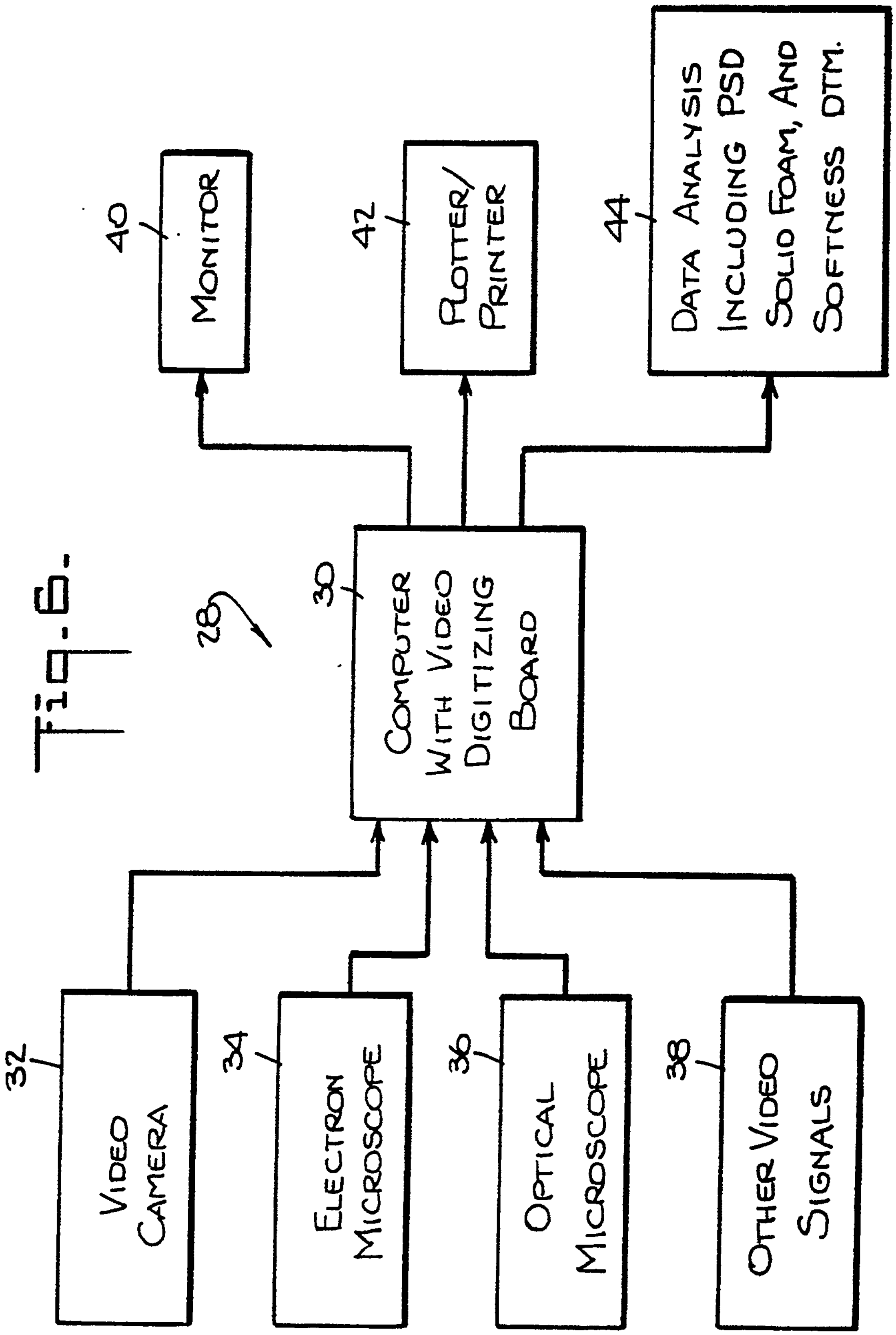
28
30
Computer With Video Digitizing Board
32
Video Camera
34
Electron Microscope
36
Optical Microscope
38
Other Video Signals
40
Monitor
42
Plotter/ Printer
44
Data Analysis Including PSD Solid Foam, And Softness DTM.

Fig. 6.

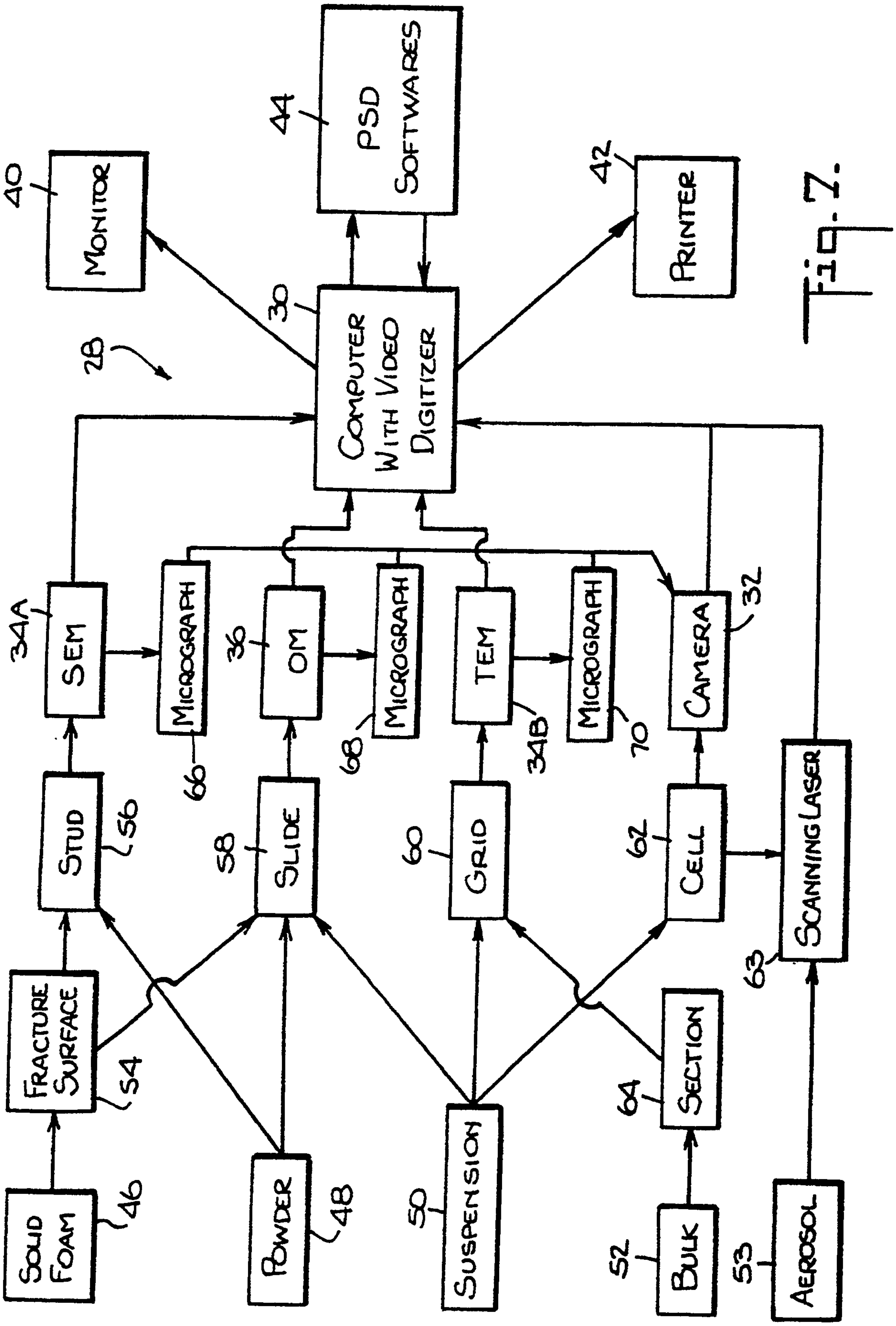
Monitor
40
PSD
Softwares
44
Printer
42
28
Computer
With Video
Digitizer
30
SEM
34A
Micrograph
66
OM
36
Micrograph
68
TEM
34B
Micrograph
70
Camera
32
Stud
56
Slide
58
Grid
60
Cell
62
Scanning Laser
63
Fracture
Surface
54
Section
64
Solid
Foam
46
Powder
48
Suspension
50
Bulk
52
Aerosol
53

Fig. 7.

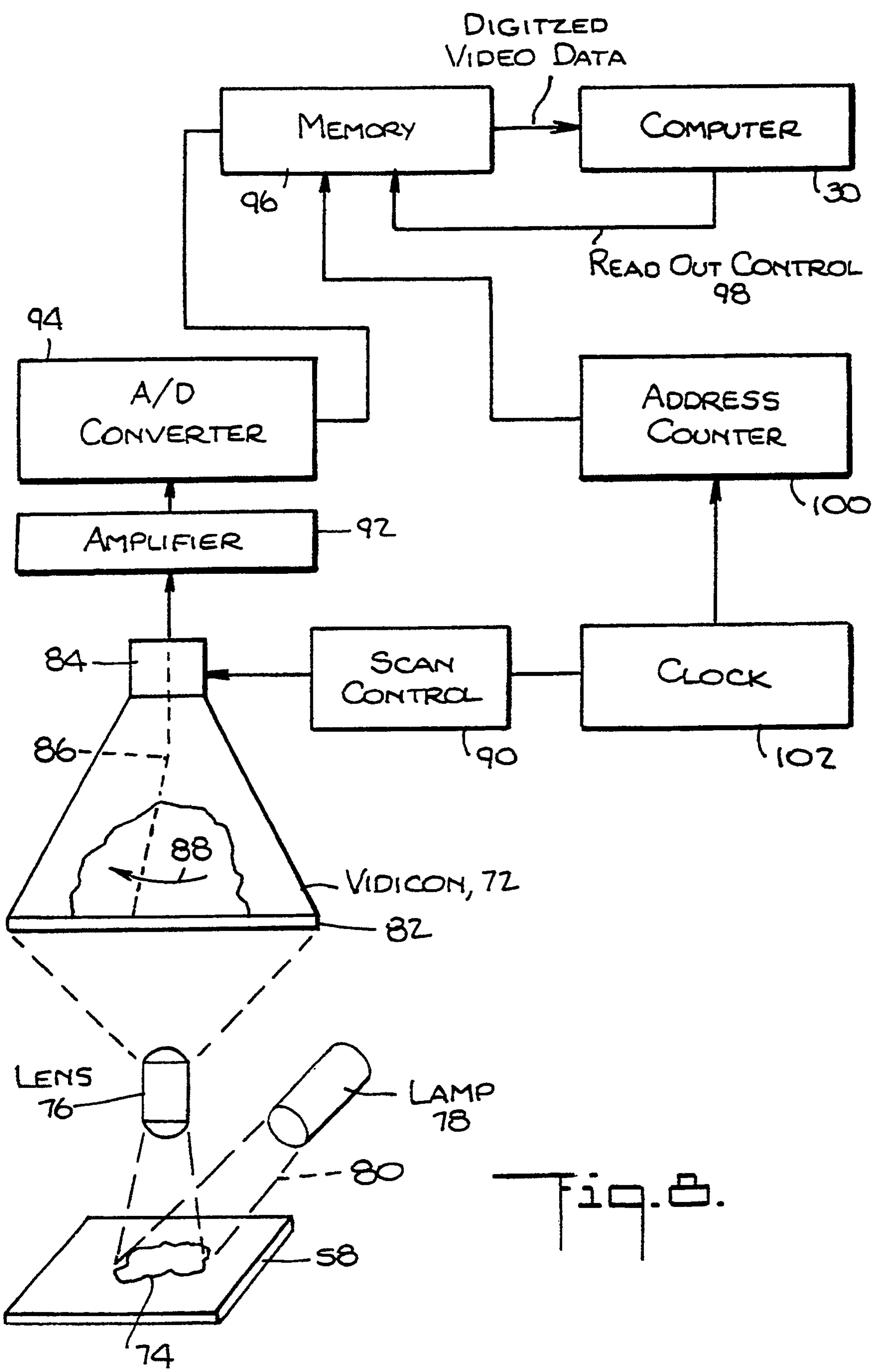

DIGITZED VIDEO DATA
MEMORY
96
COMPUTER
30
READ OUT CONTROL 98
94
A/D CONVERTER
ADDRESS COUNTER
100
AMPLIFIER
92
84
SCAN CONTROL
CLOCK
86
90
102
88
VIDICON, 72
82
LENS 76
LAMP 78
80
58
74


Fig.8.

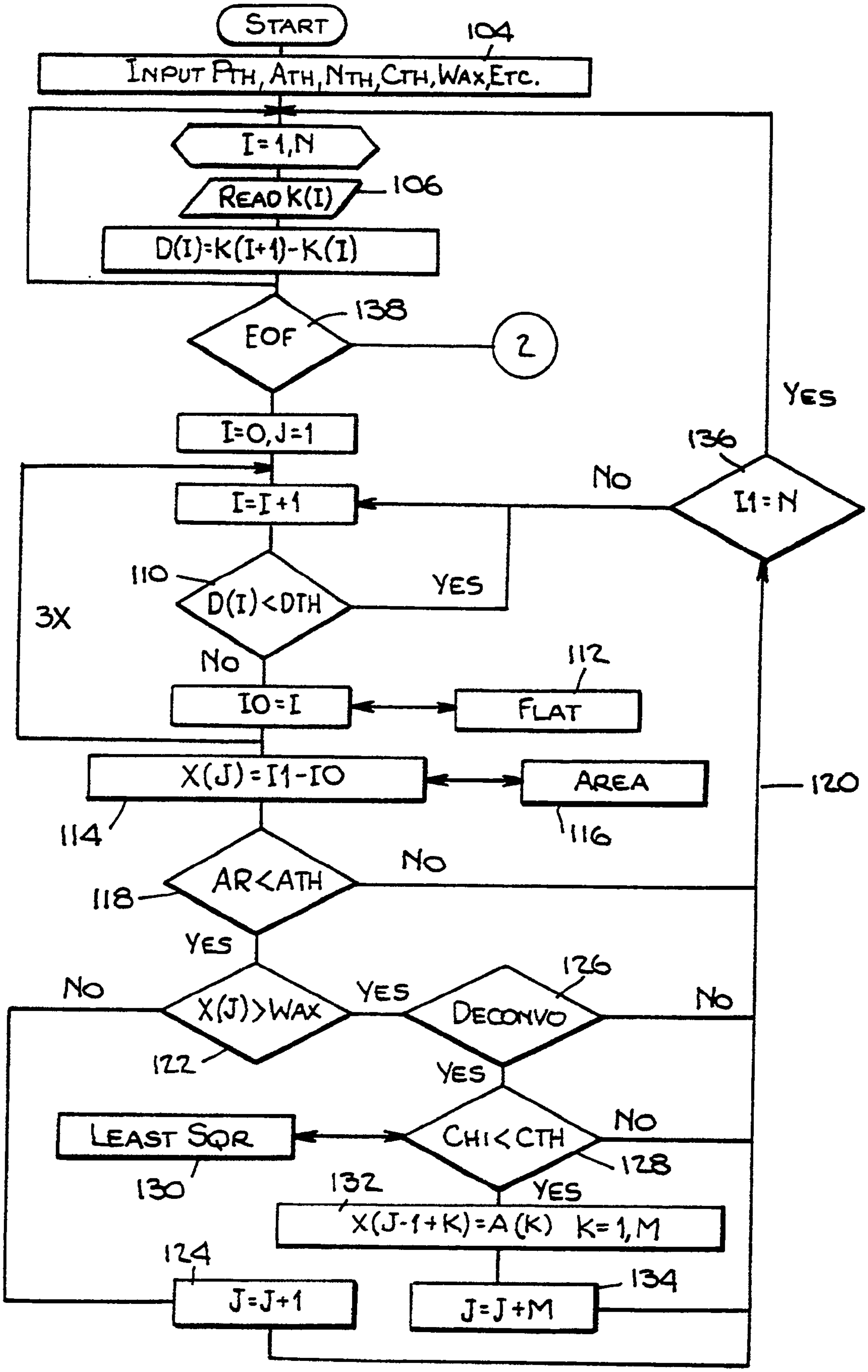
START
104
INPUT PTH, ATH, NTH, CTH, WAX, ETC.
I=1,N
READ K(I)
106
D(I)=K(I+1)-K(I)
138
EOF
2
YES
136
I1=N
NO
I=0, J=1
I=I+1
110
D(I)<DTH
YES
3X
NO
112
I0=I
FLAT
X(J)=I1-I0
AREA
120
114
116
NO
AR<ATH
118
YES
126
NO
X(J)>WAX
YES
DECONVO
NO
122
YES
LEAST SQR
CHI<CTH
NO
128
130
132
YES
X(J-1+K)=A(K) K=1,M
124
134
J=J+1
J=J+M

Fig.9.

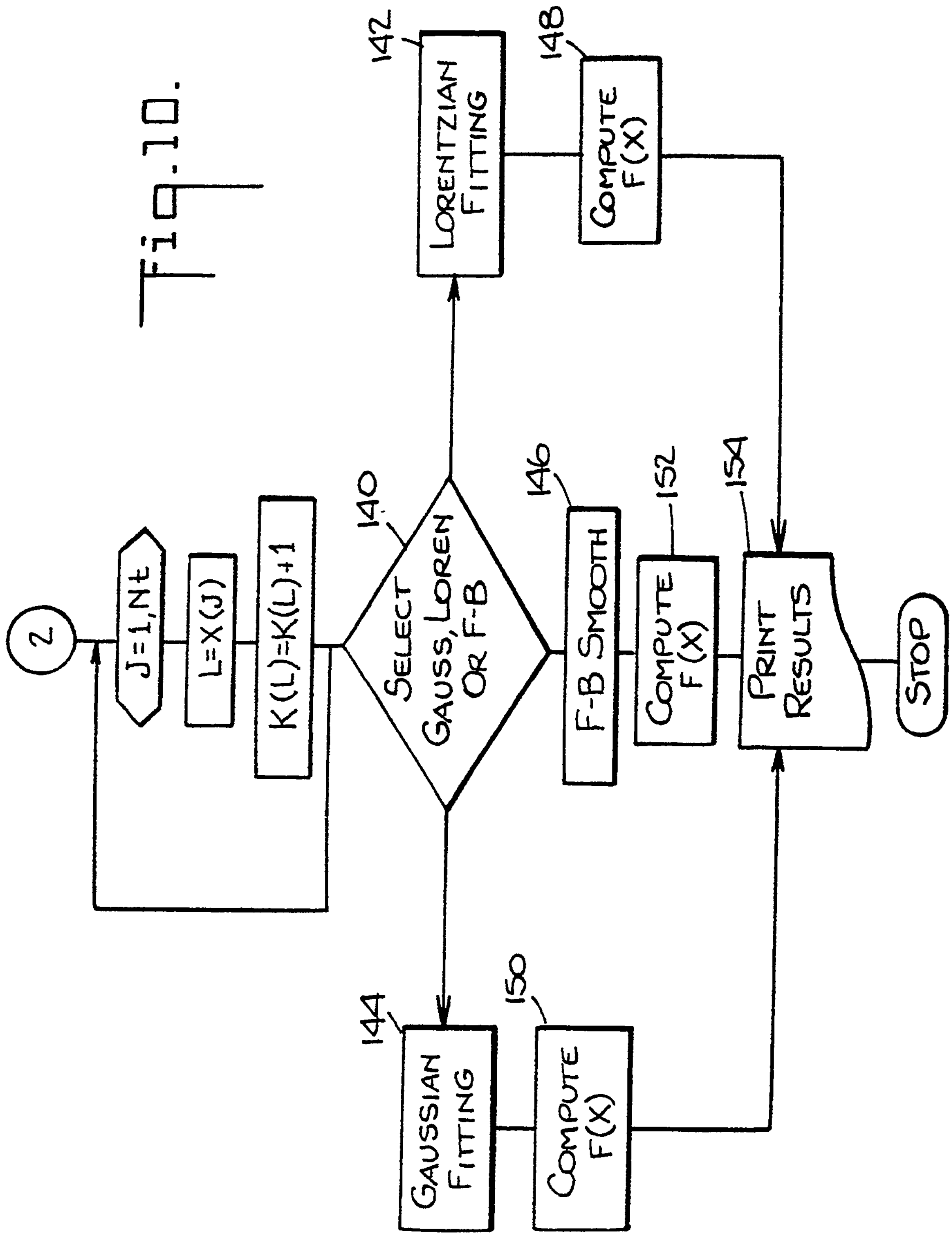
2
J=1,Nt
L=X(J)
K(L)=K(L)+1
140
Select Gauss, Loren Or F-B
142
Lorentzian Fitting
148
Compute F(X)
144
Gaussian Fitting
150
Compute F(X)
146
F-B Smooth
152
Compute F(X)
154
Print Results
Stop

Fig.10.

European Patent Office

# EUROPEAN SEARCH REPORT

Application Number

EP 90 31 3990

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,Y | JOURNAL OF COLLOID AND INTERFACE SCIENCE vol. 126, no. 1, November 1988, NEW-YORK, USA pages 93 - 100; J.Z. RUAN ET AL.: "Pore size distributions of foams from chord distributions of random lines: mathematical inversion and computer simulation" * page 93, column 2, line 10 - page 97, column 2, line 6 * | 1-10 | G06K9/50 |
| Y | GB-A-1328124 (BAUSCH & LOMB INC.) * page 1, lines 79 - 94 * * page 4, line 16 - page 105; figures 2, 38 * * page 6, lines 1 - 121; figure 6 * * page 9, lines 77 - 117 * | 1-10 | |
| A | GB-A-2217498 (INDUSTRIAL TECHNOLOGY RES. INST.) * page 1, line 1 - page 3, line 12 * * page 6, line 18 - page 10, line 5; figures 5-8 * | 1, 8 | |
| D,A | US-A-4249648 (J.A. MEYER) * abstract * * column 3, line 54 - column 4, line 65 * | 1-4, 8 | TECHNICAL FIELDS SEARCHED (Int. Cl.5 ) G06K G01N G06M G07F |

The present search report has been drawn up for all claims

| Place of search | Date of completion of the search | Examiner |
|---|---|---|
| BERLIN | 03 APRIL 1991 | MOUTARD P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)